# FASCICULE DE BREVET EUROPEEN

(11) **EP 4 626 771 B1**
(45) Date de publication et mention de la délivrance du brevet: **16.09.2026**
(21) Numéro de dépôt: 23817801.6
(22) Date de dépôt: 26.10.2023
(51) Int. Cl.: B62D 25/04

(54) **PIED AVANT RENFORCÉ POUR CHOC AVANT À FAIBLE RECOUVREMENT**
VERSTÄRKTER A-SÄULE FÜR FRONTAUFPRALL MIT GERINGER ÜBERLAPPUNG.
REINFORCED A-PILLAR FOR AN FRONT OFFSET CRASH

(30) Priorité: 30.11.2022 FR 2212538
(43) Date de publication de la demande: 08.10.2025
(73) Titulaire: Stellantis Auto SAS, 78300 Poissy (FR)
(72) Inventeur: BREAL, Ronan, 25200 BETHONCOURT (FR); KARKAR, Manaf, BOUSKOURA, 27182 (MA); HIGELIN, Vincent, 25200 MONTBELIARD (FR)
(74) Mandataire: BCIP
(86) Numéro de dépôt international: PCT/FR2023/051687
(87) Numéro de publication internationale: WO 2024/115830

(56) Documents cités:
- EP-A2- 1 116 641
- WO-A1-2018/078226
- DE-A1- 102019 218 665
- US-A1- 2016 016 612
- US-A1- 2016 052 554

## Description

La présente invention revendique la priorité de la demande française 2212538 déposée le 30 novembre 2022. Le domaine technique concerne les caisses de véhicules automobiles comprenant un pied avant renforcé ainsi que les véhicules automobiles présentant une telle caisse.

En matière de sécurité routière, les constructeurs d'automobiles doivent prendre en compte de multiples préoccupations et réglementations lors du développement de nouveaux véhicules. En particulier, les constructeurs d'automobiles doivent assurer la sécurité des passagers du véhicule en cas de choc. Les comportements des véhicules automobiles dans les différentes situations de chocs sont réglementés et testés en mettant en œuvre des procédures de tests normalisées. Les exigences en termes de résultats à ces tests sont toujours plus nombreuses et plus difficiles à satisfaire, obligeant les constructeurs d'automobiles à innover constamment.

Parmi les procédures normalisées, l'une d'elles consiste à provoquer une collision frontale entre le véhicule et une barrière, la barrière impactant le véhicule seulement sur un quart latéral du pare-chocs avant. Un tel choc avant est communément appelé choc avant à faible recouvrement. Par la suite un choc avant désigne plus particulièrement un tel choc avant à faible recouvrement.

Lors d'un choc avant à faible recouvrement, le pare-chocs avant ne peut assurer efficacement l'absorption de l'énergie libérée lors du choc et il s'opère souvent un pivotement de la roue vers l'habitacle et en particulier vers le pied avant. Le pied avant est généralement constitué de plusieurs tôles assemblées en formant une feuillure, qui est particulièrement susceptible d'être impactée par la roue lors d'un choc avant à faible recouvrement. Or en cas d'impact entre la roue et la feuillure, il existe un risque important que celle-ci s'ouvre déstructurant ainsi le pied avant qui n'est dès lors plus en mesure d'assurer l'intégrité de l'habitacle du véhicule. Afin de renforcer le pied avant, certains véhicules présentent des renforts qui sont fixés sur le pied en travers de la feuillure de manière à éviter son ouverture lors d'un choc avant à faible recouvrement. Cependant, lorsque le véhicule est prévu pour être équipé de roues de dimensions importantes par rapport aux passages de roue, les renforts habituellement utilisés peuvent s'avérer limitatifs pour les dimensions disponibles pour les roues ou inadaptés.

Ainsi, il existe un besoin d'une solution permettant de renforcer un pied avant dans les situations d'un choc avant, notamment d'un choc avant à faible recouvrement, tout en permettant d'installer des roues de dimensions importantes par rapport aux passages de roue.

Le document WO 2018/078226A1 divulgue un véhicule automobile comprenant une roue avant, un pied avant, situé à l'arrière de la roue avant, un passage de roue adjacent au pied avant et délimitant l'habitacle du véhicule, un renfort fixé au pied avant et au passage de roue, configuré pour interférer avec la roue avant et limiter une intrusion de ladite roue dans l'habitacle en cas de collision frontale et comprenant une portion centrale plate s'étendant transversalement le long du pied avant et du passage de roue.

La présente invention a pour objet de pallier les problèmes exposés précédemment. Dans ce contexte technique, un but de la présente invention est de fournir une caisse présentant au moins un pied avant renforcé contre les chocs avant, notamment les chocs avant à faible recouvrement et acceptant des dimensions de roue importantes par rapport aux dimensions des passages de roue.

A cet effet, la présente invention se rapporte à une caisse de véhicule automobile comprenant au moins un pied avant, délimitant en partie un passage de roue conçu pour accueillir une roue, le pied avant étant composé d'au moins un assemblage d'au moins deux pièces de tôleries formant ensemble une feuillure de jonction s'étendant dans le passage de roue, les pièces de tôlerie étant jointes entre elles par une pluralité de points de soudure localisés sur la feuillure de jonction, la caisse comprenant une pièce de renfort rapportée sur le pied avant et disposée entre le pied avant et une roue accueillie dans le passage de roue, la pièce de renfort étant conçue pour renforcer le pied avant et empêcher l'ouverture de la feuillure en cas de choc avant, la pièce de renfort couvrant une partie du pied avant et s'étendant de chaque côté de la feuillure de jonction, la feuillure de jonction présentant une pluralité d'excroissances s'étendant dans le passage de roue et destinées à recevoir les points de soudure, la pièce de renfort présentant une pluralité d'ouvertures localisées aux droits de chaque excroissance et dimensionnées pour permettre le passage de chaque excroissance dans une ouverture, lorsque la pièce de renfort est fixée sur le pied avant.

L'invention concerne enfin un véhicule automobile comportant une caisse selon l'invention.

Ainsi, la caisse selon l'invention présente un pied avant, présentant une feuillure. La pièce de renfort est conçue pour protéger la feuillure en cas de choc avant à faible recouvrement de sorte que lors du choc, l'impact de la roue sur la feuillure présente des risques nuls ou limités de provoquer la désolidarisation de la feuillure. La présence d'excroissance sur la feuillure pour accueillir les points de soudure permet d'obtenir une fixation adéquate du pied avant tout en limitant l'extension de la feuillure aux excroissances. Les ouvertures réalisées dans la pièce de renfort aux droits des excroissances, lorsque la pièce de renfort est fixée sur le pied avant, permettent de limiter l'encombrement du pied avant et de la pièce de renfort, puisque le passage des excroissances dans les ouvertures permet de positionner la pièce de renfort au plus près du pied avant. Ainsi, la pièce de renfort selon l'invention permet de libérer de l'espace dans le passage de roue pour une roue de dimension plus importante qu'avec un renfort classique.

Selon un mode de réalisation de l'invention, la pièce de renfort est fixée par vissage dans le pied avant.

Avantageusement, la pièce de renfort est fixée en outre à une traverse de tablier.

Selon une possibilité, la pièce de renfort est formée d'une tôle emboutie.

Selon un mode de réalisation, les ouvertures sont alignées et présentent chacune une forme oblongue.

Selon une possibilité, la pièce de renfort forme une marche.

Avantageusement, la marche est renforcée par au moins une nervure.

Selon une possibilité, les excroissances de la feuillure forment une dentelure.

L'invention sera mieux comprise à la lecture de la description détaillée qui va suivre, donnée uniquement à titre d'exemple non limitatif et faite en se référant aux dessins annexés sur lesquels :
[Fig. 1] la figure 1, représente une vue en perspective et de détails d'un pied avant et d'une pièce de renfort d'une caisse selon l'invention ;
[Fig. 2] la figure 2, représente une vue de détails de la caisse de la figure 1 dans laquelle la pièce de renfort n'est pas représentée afin de montrer la feuillure de jonction du pied avant ;
[Fig. 3] la figure 3, représente une vue en coupe selon un plan horizontal du pied avant et de la pièce de renfort montrant une excroissance dans un ajourage.

Dans ces figures, les mêmes références sont utilisées pour désigner les mêmes éléments.

Une caisse 1 de véhicule automobile selon l'invention, illustrée sur les figures, est destinée à équiper un véhicule selon l'invention présentant un comportement adéquat en cas de choc avant à faible recouvrement.

La caisse 1 de véhicule selon l'invention comprend ainsi au moins un pied avant 2, creux, formant un profilé généralement vertical et délimitant en partie un passage de roue 3 conçu pour accueillir une roue, non illustrée sur les figures.

Le pied avant 2 est au moins en partie composé d'un assemblage 4 d'au moins deux pièces de tôlerie 5 formant ensemble une feuillure 6 de jonction. La feuillure 6 s'étend dans le passage de roue 3, les pièces de tôlerie 5 étant jointes entre elles par une pluralité de points de soudure 7 localisés sur la feuillure 6 de jonction.

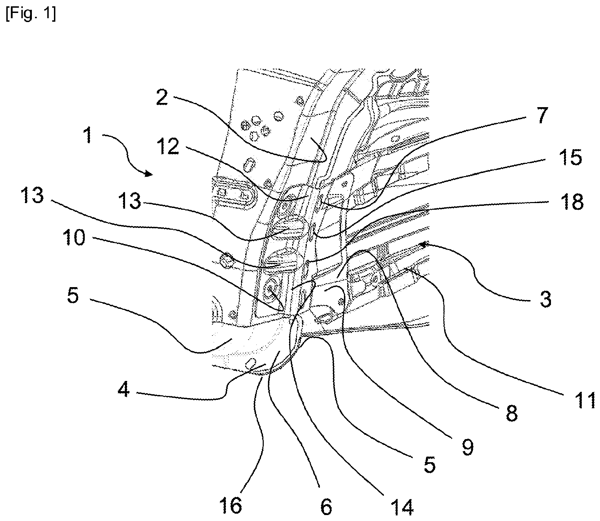

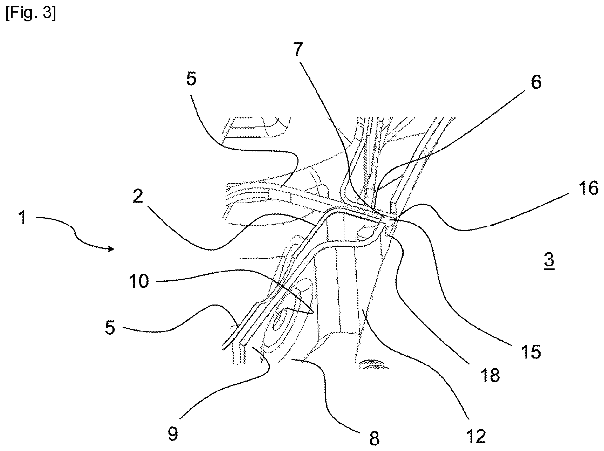

La caisse 1 selon l'invention comprend en outre une pièce de renfort 8 rapportée sur le pied avant 2 et disposée entre le pied avant 2 et une roue accueillie dans le passage de roue 3. La pièce de renfort 8 est conçue pour renforcer le pied avant 2 et empêcher l'ouverture de la feuillure 6 en cas de choc avant. Dans l'exemple illustré sur les figures 1 et 3, la pièce de renfort 8 est formée d'une tôle 9 emboutie. La pièce de renfort 8 est, par exemple, fixée par vissage dans le pied avant 2 et est, à cette effet, pourvue d'au moins une interface de vissage 10. De façon avantageuse, la pièce de renfort 8 est également fixée à une traverse de tablier 11, comme illustré sur la figure 1. Par ailleurs, comme illustré sur la figure 3, la pièce de renfort 8 forme une marche 12 et avantageusement la marche 12 est renforcée par au moins une nervure 13, en l'occurrence deux nervures 13.

La pièce de renfort 8 couvre une partie du pied avant 2 et s'étend de chaque côté de la feuillure 6 de jonction. Une portion 14 de la marche 12 est, par exemple, dimensionnée pour s'étendre en appui su une des pièces de tôlerie 5 et épouser au moins en partie la forme de la feuillure 6 de jonction.

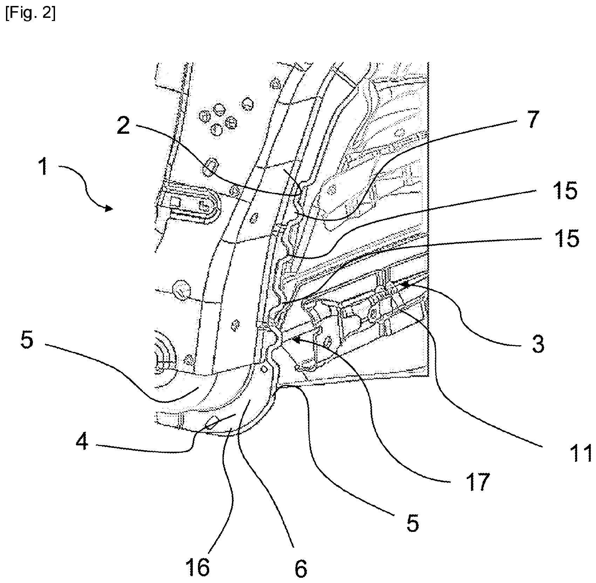

Comme illustré sur la figure 2 dans laquelle la pièce de renfort 8 est omise pour faciliter la compréhension, la feuillure 6 de jonction présente une pluralité d'excroissances 15 qui s'étendent dans le passage de roue 3 et qui sont destinées à recevoir les points de soudure 7. Chaque excroissance 15 est formée par une découpe d'une extrémité libre 16 de la feuillure 6. Ainsi, par exemple, les excroissances 15 de la feuillure forment une dentelure 17, comme illustré sur la figure 2. Dans le mode de réalisation illustré sur les figures, la feuillure 6 de jonction est sensiblement plane et les excroissances 15 sont donc sensiblement alignées.

La pièce de renfort 8 présente une pluralité d'ouvertures 18, chacune de forme oblongue, localisées aux droits de chaque excroissance 15 et dimensionnées pour permettre le passage de chaque excroissance 15 dans une ouverture 18, comme illustré sur la figure 3, lorsque la pièce de renfort 8 est fixée sur le pied avant 2. Les dimensions de chaque ouverture 18 sont évidemment ajustées afin d'épouser le contour de l'excroissance 15 correspondante au plus prés.

Comme illustré sur la figure 3, il est ainsi possible, pour chaque excroissance 15, de s'étendre à travers la pièce de renfort 8 tout en permettant à cette dernière d'être positionnée en appui d'au moins une partie du pied avant 2.

Ainsi, la caisse 1 de véhicule selon l'invention présente un pied avant 2 muni d'une feuillure 6 de jonction protégée par la pièce de renfort 8. Le passage des excroissances 15 dans les ouvertures 18 permet de positionner la pièce de renfort 8 au plus près des pièces de tôlerie 5 du pied avant 2. La pièce de renfort 8 renforce le pied avant 2 pour obtenir un véhicule selon l'invention présentant un comportement adéquat en cas de choc avant à faible recouvrement, tout en permettant l'installation de roues aux dimensions plus importantes qu'avec un renfort classique.

L'invention ne se limite pas au mode de réalisation de la caisse de véhicule décrit ci-avant, seulement à titre d'exemple, mais d'autres modes de réalisation peuvent être conçus par l'homme de métier sans sortir du cadre et de la portée de la présente invention, définie uniquement par les revendications annexées.

## Revendications

1. Caisse (1) de véhicule automobile comprenant au moins un pied avant (2), délimitant en partie un passage de roue (3) conçu pour accueillir une roue, le pied avant (2) étant composé d'au moins un assemblage (4) d'au moins deux pièces de tôleries (5) formant ensemble une feuillure (6) de jonction s'étendant dans le passage de roue (3), les pièces de tôlerie (5) étant jointes entre elles par une pluralité de points de soudure (7) localisés sur la feuillure (6) de jonction, la caisse (1) comprenant une pièce de renfort (8) rapportée sur le pied avant (2) et disposée entre le pied avant (2) et une roue accueillie dans le passage de roue (3), la pièce de renfort (8) étant conçue pour renforcer le pied avant (2) et empêcher l'ouverture de la feuillure (6) en cas de choc avant, la pièce de renfort (8) couvrant une partie du pied avant (2) et s'étendant de chaque côté de la feuillure (6) de jonction, **caractérisé en ce que** ladite feuillure (6) de jonction présente une pluralité d'excroissances (15) s'étendant dans le passage de roue (3) et destinées à recevoir les points de soudure (7), ladite pièce de renfort (8) présente une pluralité d'ouvertures (18) localisées aux droits de chaque excroissance (15) et dimensionnées pour permettre le passage de chaque excroissance (15) dans une ouverture (18), lorsque ladite pièce de renfort (8) est fixée sur ledit pied avant (2).

2. Caisse (1) de véhicule selon la revendication 1, **caractérisée en ce que** la pièce de renfort (8) est fixée par vissage dans le pied avant (2).

3. Caisse (1) de véhicule selon l'une des revendications 2, **caractérisée en ce que** la pièce de renfort (8) est fixée en outre à une traverse de tablier (11).

4. Caisse (1) de véhicule selon l'une des revendications 1 à 3, **caractérisée en ce que** la pièce de renfort (8) est formée d'une tôle (9) emboutie.

5. Caisse (1) de véhicule selon l'une des revendications 1 à 4, **caractérisée en ce que** les ouvertures (18) sont alignées et présentent chacune une forme oblongue.

6. Caisse (1) de véhicule selon l'une des revendications 1 à 5, **caractérisée en ce que** la pièce de renfort (8) forme une marche (11).

7. Caisse (1) de véhicule selon la revendication 6, **caractérisée en ce que** la marche (11) est renforcée par au moins une nervure (13).

8. Caisse (1) de véhicule selon l'une des revendications 1 à 7, **caractérisée en ce que** les excroissances (15) de la feuillure (6) forment une dentelure (17).

9. Véhicule automobile comportant une caisse (1) selon l'une des revendications 1 à 8.

## Patentansprüche

1. Kraftfahrzeugkarosserie (1) mit wenigstens einem vorderen Fuß (2), der teilweise einen Radkanal (3) begrenzt, der zur Aufnahme eines Rades ausgelegt ist, wobei der vordere Fuß (2) aus wenigstens einer Anordnung (4) von wenigstens zwei Blechteilen (5) besteht, die zusammen einen sich in den Radkanal (3) erstreckenden Verbindungsfalz (6) bilden, wobei die Blechteile (5) durch eine Vielzahl von Schweißpunkten (7) an dem Verbindungsfalz (6) miteinander verbunden sind, wobei die Karosserie (1) ein Verstärkungsteil (8) umfasst Am Vorderfuß (2) angebracht und zwischen dem Vorderfuß (2) und einem in dem Raddurchgang (3) aufgenommenen Rad angeordnet, wobei das Verstärkungsteil (8) zur Verstärkung des Vorderfußes (2) und zur Verhinderung des Öffnens des Falzes (6) bei einem Frontaufprall ausgebildet ist, wobei das Verstärkungsteil (8) einen Teil des Vorderfußes (2) abdeckt und sich zu jeder Seite des Verbindungsfalzes (6) erstreckt, **dadurch gekennzeichnet, dass** der Verbindungsfalz (6) eine Vielzahl von Ausstülpungen (15) aufweist, die sich in den Raddurchgang (3) erstrecken und zur Aufnahme bestimmt sind An den Schweißpunkten (7) weist das Verstärkungsteil (8) eine Vielzahl von Öffnungen (18) auf, die an den Enden jedes Vorsprungs (15) angeordnet und so dimensioniert sind, dass sie den Durchtritt jedes Vorsprungs (15) in eine Öffnung (18) ermöglichen, wenn das Verstärkungsteil (8) am Vorderfuß (2) befestigt ist.

2. Fahrzeugkarosserie (1) nach Anspruch 1, **dadurch gekennzeichnet, dass** das Verstärkungsteil (8) im Vorderfuß (2) verschraubt ist.

3. Wagenkasten (1) nach einem der Ansprüche 2, **dadurch gekennzeichnet, dass** das Verstärkungsteil (8) zusätzlich an einer Schürzenschwelle (11) befestigt ist.

4. Wagenkasten (1) nach einem der Ansprüche 1 bis 3, **dadurch gekennzeichnet, dass** das Verstärkungsteil (8) aus einem Tiefziehblech (9) gebildet ist.

5. Fahrzeugkarosserie (1) nach einem der Ansprüche 1 bis 4, **dadurch gekennzeichnet, dass** die Öffnungen (18) fluchten und jeweils eine längliche Form aufweisen.

6. Wagenkasten (1) nach einem der Ansprüche 1 bis 5, **dadurch gekennzeichnet, dass** das Verstärkungsteil (8) eine Stufe (11) bildet.

7. Fahrzeugkarosserie (1) nach Anspruch 6, **dadurch gekennzeichnet, dass** die Stufe (11) durch mindestens eine Rippe (13) verstärkt ist.

8. Wagenkasten (1) nach einem der Ansprüche 1 bis 7, **dadurch gekennzeichnet, dass** die Ausstülpungen (15) des Falzes (6) eine Verzahnung (17) bilden.

9. Kraftfahrzeug mit einem Aufbau (1) nach einem der Ansprüche 1 bis 8.

## Claims

1. Body (1) of a motor vehicle comprising at least one front foot (2), partly defining a wheel arch (3) designed to receive a wheel, the front foot (2) being compound of at least one assembly (4) of at least two sheet metal pieces (5) together forming a junction rebate (6) extending in the wheel arch (3), the sheet metal pieces (5) being joined together by a plurality of spot welds (7) located on the junction rebate (6), the body (1) comprising a reinforcing component (8) attached to the front foot (2) and arranged between the front foot (2) and a wheel received in the wheel arch (3), the reinforcing component (8) being designed to reinforce the front foot (2) and prevent opening of the rebate (6) in the event of impact front, the reinforcing component (8) covering a part of the front foot (2) and extending on each side of the junction rebate (6), wherein said junction rebate (6) has a plurality of protuberances (15) extending in the wheel arch (3) and intended for the weld points (7), said reinforcing to be received (8) has a plurality of openings (18) located in line with each protuberance (15) and dimensioned to allow each protuberance (15) to pass into an opening (18), when said reinforcing component (8) is fixed to said front foot (2).

2. Body (1) according to claim 1, wherein the reinforcing component (8) is fixed by screwing into the front leg (2).

3. Body (1) according to claim 2, wherein the reinforcing component (8) is further fixed to an apron cross-member (11).

4. Body (1) according to one of claims 1 to 3, wherein the reinforcing component (8) is made of a stamped sheet (9).

5. Body (1) according to one of claims 1 to 4, wherein the openings (18) are aligned and each have an oblong shape.

6. Body (1) according to one of claims 1 to 5, wherein the reinforcing component (8) is a step (11).

7. Body (1) according to claim 6, wherein the step (11) is reinforced by at least one rib (13).

8. Body (1) according to one of claims 1 to 7, wherein the protuberances (15) of the rebate (6) form a serration (17).

9. Motor vehicle comprising a body (1) according to one of Claims 1 to 8.
